## Europäisches Patentamt
## European Patent Office
## Office européen des brevets

(11) Publication number: **0 144 431**
**B1**

(12) **EUROPEAN PATENT SPECIFICATION**

(45) Date of publication of patent specification: **24.10.90**

(51) Int. Cl.⁵: **G 11 B 5/09, H 04 L 1/00, G 11 B 20/12**

(21) Application number: **84901104.4**

(22) Date of filing: **12.03.84**

(86) International application number:
**PCT/JP84/00099**

(87) International publication number:
**WO 84/03808 27.09.84 Gazette 84/23**

(54) **ERROR-CORRECTING APPARATUS.**

(30) Priority: **12.03.83 JP 40959/83**
**19.03.83 JP 46796/83**

(43) Date of publication of application:
**19.06.85 Bulletin 85/25**

(45) Publication of the grant of the patent:
**24.10.90 Bulletin 90/43**

(84) Designated Contracting States:
**AT DE FR GB NL**

(56) References cited:
GB-A-1 578 485  GB-A-2 081 479
GB-A-2 060 227  JP-A-5 710 561
GB-A-2 071 371  JP-A-56 111 349
GB-A-2 076 569  JP-A-58 148 551
GB-A-2 079 993  US-A-4 211 997
GB-A-2 080 997

IEEE TRANSACTIONS ON INFORMATION THEORY, VOL.IT-24, No.1, (January 1978) IRVINGS. REED, et al The Fast Decoding of Reed-Solomon Codes Using Fermat Theoretic Transforms and Continued Fractionsr, p. 100-106

(73) Proprietor: **SONY CORPORATION**
**7-35 Kitashinagawa 6-Chome Shinagawa-ku**
**Tokyo 141 (JP)**

(72) Inventor: **FURUYA, Tsuneo Sony Corporation**
**7-35, Kitashinagawa 6-chome Shinagawa-ku**
**Tokyo 141 (JP)**
Inventor: **HORI, Katsuya Sony Corporation**
**7-35, Kitashinagawa 6-chome Shinagawa-ku**
**Tokyo 141 (JP)**

(74) Representative: **Thomas, Christopher Hugo et al**
**D Young & Co 10 Staple Inn**
**London WC1V 7RD (GB)**

(56) References cited:
**Audio Eng. Society Preprint 31.10/3.11.1980 p. 1-14**

**Error Correcting Codes, W. Weseley Peterson 1972, p. 5-7**

Courier Press, Leamington Spa, England.

# EP 0 144 431 B1

**Description**

This invention relates to error-correcting apparatus for correcting errors in a digital information signal, which, for example, is recorded on a recording medium, such as a compact disc, or is transmitted over an optical fibre.

In an optical digital audio disc (compact disc), a main channel consisting of a digital audio signal and a sub-channel consisting of data for control, display or the like are recorded on spiral signal tracks. Error-correction coding is performed for the main channel and the sub-channel, respectively. Eight channels called P, Q, R, S, T, U, V and W are defined in the sub-channel. The P and Q channels are used for the selection of a programme when the compact disc is played back, and display data or audio data are inserted in the other six channels R to W. For example, such data may relate to the composer or performers of music recorded in the main channel.

The data in the sub-channel include control data such as an indication of the kind of data recorded, or instructions for processing the data in the sub-channel. These control data are needed to indicate the sub-channel or accurately to process the audio data, and their significance is higher than that of the display or audio data. Therefore, it is necessary to prevent errors from occurring in the control data upon playback. Thus, if just one bit of the control data is in error, display data may be erroneously processed as audio data, which may cause an abnormal sound to be generated in a loudspeaker.

As well as the data in the sub-channel of a compact disc, there is a case where the kinds of data which are recorded or transmitted are not identical. For example, in a videotext system using a domestic television recevier as a display device, there is a case where a control command is used as a special command in order to transmit graphic information through, for example, an existing telephone line network or an optical transmission path.

Audio Engineering Preprint, 31 October 1980, The Compact Disc Digital Audio System: Modulation and Error-Correction, discloses an apparatus generally in accordance with the pre-characterizing part of Claim 1.

According to the present invention there is provided an apparatus for correcting errors in data encoded by a process comprising generating a first block code comprising k first parity symbols relating to n input symbols and generating a second block code comprising l second parity symbols relating to at least said n+k symbols, said apparatus comprising:

first and second decoders responsive to said first and second block codes respectively and generating signals representing a number of error symbols and their locations;

the error-correction control including both detection of errors using one of said signals and detection of errors using both of said signals; the apparatus being characterized in that:

said symbols supplied to said apparatus comprise second blocks of n+k+m+l symbols, said n symbols representing information which is more significant than the information represented by said m symbols; said l second parity symbols relate to said n+k+m symbols;

said first decoder derives in dependence on said first block code within said second block a first signal representing the number, including zero, of error symbols in said n+k symbols;

said second decoder then derives in dependence on said second block code, a second signal representing the number, including zero, of error symbols, before error-correction by said second decoder, in said n+k+m+l symbols; and

the error correction processing by said second decoder is controlled by said first and second signals.

According to the present invention there is also provided an apparatus for correcting errors in data encoded by a process comprising generating a first block code comprising k first parity symbols relating to n input symbols and generating a second block code comprising l second parity symbols relating to at least said n+k symbols, said apparatus comprising:

first and second decoders responsive to said first and second block codes respectively and generating signals representing a number of error symbols and their locations;

the error-correction control including both detection of errors using one of said signals and detection of errors using both of said signals;

the apparatus being characterised in that:

said symbols supplied to said apparatus comprise second blocks of n+k+m+l symbols, said n symbols representing information which is more significant than the information represented by said m symbols;

said l second parity symbols relate to said n+k+m symbols;

said first decoder derives in dependence on said second block code a first signal representing the number, including zero, of error symbols in said n+k+m+l symbols;

said second decoder then derives in dependence on said first block code a second signal representing the number, including zero, of error symbols, before error-correction by said second decoder, in said n+k symbols; and

the error correction processing by said second decoder is controlled by said first and second signals.

The invention will now be described by way of example with reference to the accompanying drawings, throughout which like parts are referred to by like references, and in which:

Figures 1 and 2 are diagrams of a data arrangement of a compact disc;

2

Figures 3 and 4 are diagrams for explaining a sub-coding signal of the compact disc;

Figures 5, 6 and 7 are diagrams for explaining a character graphic mode of the sub-coding signal;

Figures 8 and 9 are diagrams showing a parity check matrix for error-correction codes and a reproduced data matrix;

Figure 10 is a block diagram of a recording system;

Figure 11 is a block diagram of a reproducing system;

Figure 12 is a block diagram of an error-correcting encoder;

Figures 13, 14 and 15 are diagrams for explaining interleave processing by the error-correcting encoder;

Figure 16 is a block diagram of an error-correcting decoder;

Figures 17 and 18 are a flowchart and a table which are used for explaining the error-correcting decoder of Figure 16;

Figure 19 is a block diagram of another error-correcting decoder; and

Figure 20 is a flowchart for explaining the error-correcting decoder of Figure 19.

An embodiment error-correcting apparatus for correcting errors in the data in the sub-channel of a compact disc will now be described.

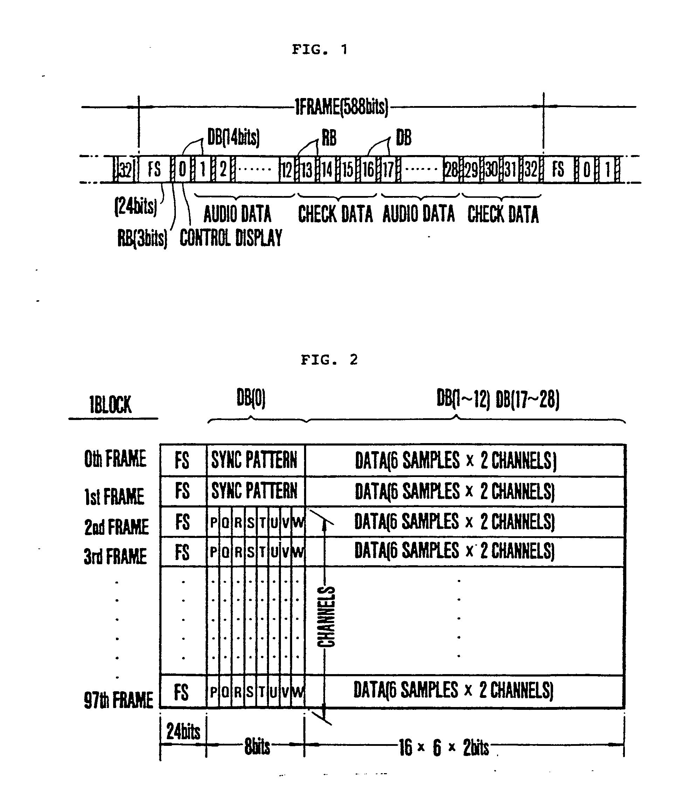

Figure 1 shows a data stream recorded on a compact disc. One frame consists of 588 bits of the data to be recorded, a frame sync pulse FS of a particular bit pattern at the beginning of each frame, and three DC-component suppression bits RB following the frame sync pulse FS. 0th to 32nd data words DB each consist of fourteen bits and three DC-component suppression bits RB arranged alternately. The 0th data word DB is a sub-coding signal or user's bits, and is used for controlling the playback of the disc, displaying the relevant information, or the like. The 1st to 12th and the 17th to 28th data words DB are allocated to the audio data in the main channel, while the 13th to 16th and the 29th to 32nd data words DB are allocated to the parity data of the error-correction codes in the main channel. Each data word DB is formed of 8-bit input data converted to fourteen bits by eight-to-fourteen conversion (EFM or eight-fourteen modulation) prior to recording.

98 frames of the above digital signal are called a block, and some processing is performed on a one-block unit basis.

Figure 2 shows the 98 frames of a block arranged in parallel, and in particular the eight bits of the first data word DB(0) in each frame. The sub-coding signals P to W in the 0th and 1st frames are sync patterns formed as predetermined bit patterns. In addition, with respect to the Q channel, CRC codes for error-detection are inserted in the last sixteen frames in the block.

A P channel signal may be a flag to indicate a pause or a music programme, the signal level being set low to indicate a music programme and high to indicate a pause. This signal is a pulse signal of period 2 Hz in the lead-out interval. Therefore, by detecting and counting this P channel signal, a selected piece of music can be located and reproduced. Using the Q channel, a similar, more complicated, control can be performed. For example, the information in the Q channel can be stored in a microcomputer provided in a disc playback apparatus, so that it is possible to perform random selection, such that even while a piece of music is being reproduced, the operation can immediately be shifted to the playback of another piece of music. The R to W channels are used to display lyricists, composers, explanation, text, and the like relating to the music recorded on the disc, or to explain them by voice.

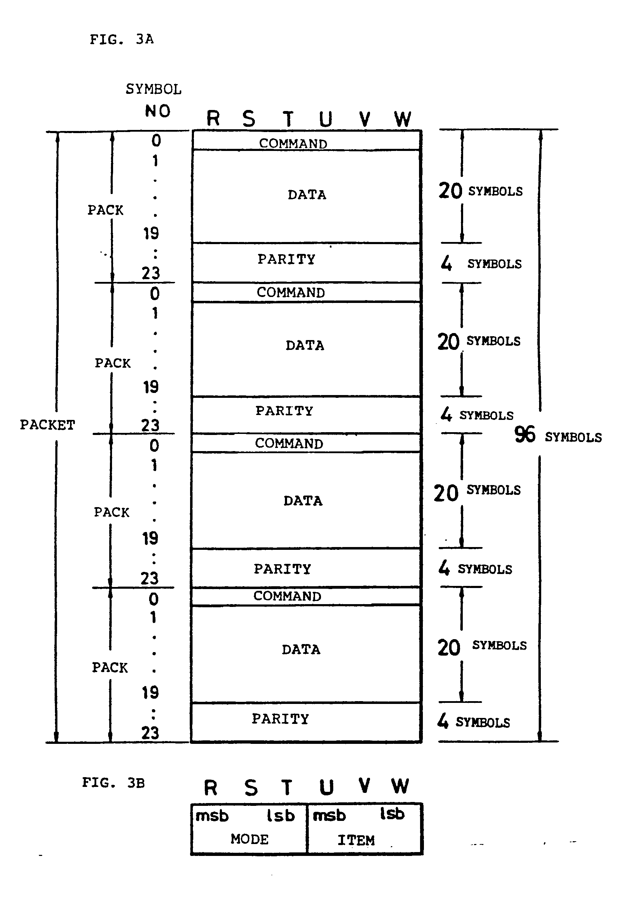

In addition, one packet consists of the sub-coding data of 96 frames excluding the sync patterns and the P and Q channels of a block. As shown in Figure 3A, this packet of 6×96 bits is further divided into four packs each of which consists of 24 symbols. The first symbol in each pack is a command, the subsequent nineteen symbols are data, and the remaining four symbols are parities for the error-correction codes in each pack. As shown in Figure 3B, a command is formed by six bits consisting of three bits for mode and three bits for item.

The information represented by the three bits for the mode is defined as follows:

0 0 0 : Zero mode
0 0 1 : Graphic mode
0 1 0 : Still picture mode
0 1 1 : Audio mode.

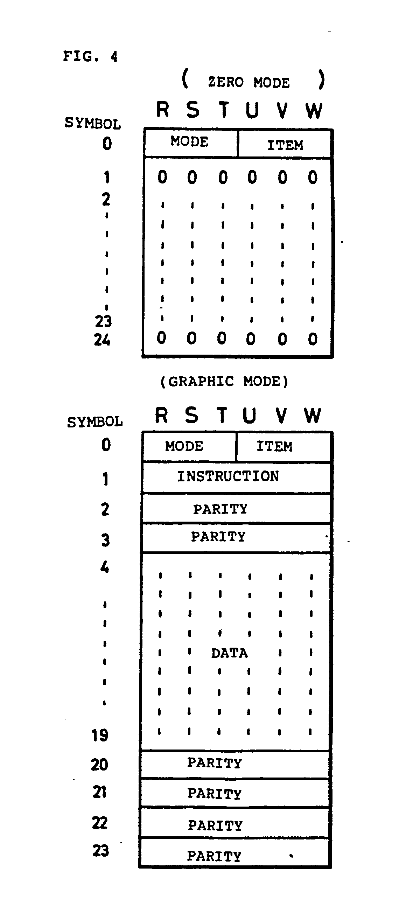

The three bits for the item indicate information of a more detailed operating mode for each of the above-mentioned operating modes. The zero mode corresponds to the case where no information is recorded in the R to W channels of the sub-coding signal. Thus, in this zero mode, as shown in Figure 4, all the bits in the pack, including the six bits for the mode and the item are set to 0.

On the other hand, in the graphic mode, where the three bits for the mode are 0 0 1, the data of each pack are arranged as shown in Figure 4. In this graphic mode, the three bits for the item are set to 0 0 1 for displaying graphics such as characters, sentences or the like, while the three bits for the item are set to 0 1 0 for full graphic whereby the data in the whole display region of the display device are controlled. The second symbol in each pack in this graphic mode is used as an instruction to give a command for control needed in the operating mode specified by a command consisting of the mode and the item.

With respect to two symbols for the command and instruction in the graphic mode, error-correction

3

coding processing is performed and two resulting parity symbols are added. In addition, sixteen symbols in the pack are used as the data region. With respect to all twenty symbols in the pack, another error-correction coding processing is carried out and the four resulting parity symbols are added.

Where predetermined commands and instructions are used, even in the still picture mode or audio mode, the error-correction coding processing is executed similarly to the above.

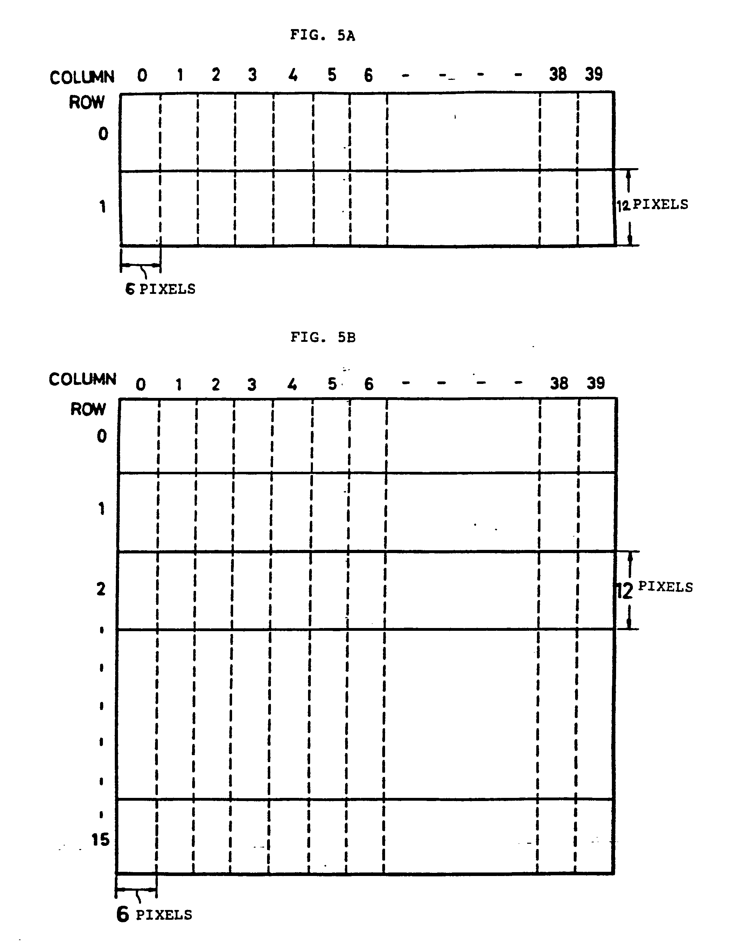

The character (font) graphic in the graphic mode will now be explained in detail. The region of a display screen which is used is called a screen region and the remaining region is called a border. The display device may be a line display shown in Figure 5A or a CRT display shown in Figure 5B.

In the screen region of the line display, the location of a character is designated by two row addresses (ROW) 0 and 1 and forty column addresses (COLUMN) 0 to 39, while each character is specified by the data of the pack. One character consists of $6 \times 12$ pixels. Although $6 \times 12$ pixels are enough to display an alphabet, $24 \times 24$ pixels are used for displaying Japanese, particularly Kanji, characters.

The size of the screen region of the CRT display corresponds to eight line displays. Therefore, the location is designated by row addresses 0 to 15 and column addresses 0 to 39.

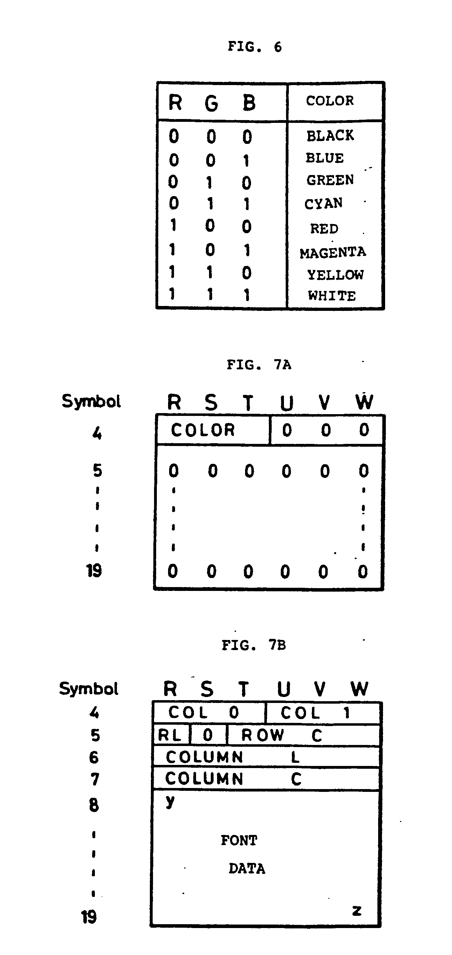

The colour of the foreground or background of the character displayed in the screen region of the line display or CRT display is designated by three bits corresponding to the components R (red), G (green) and B (blue). Figure 6 is a colour table showing the colour represented by three bits.

Instructions (six bits R S T U V W) of the character graphic are defined as follows:

```
1=0 0 0 0 0 1 : Preset screen
2=0 0 0 0 1 0 : Preset border
4=0 0 0 1 0 0 : Light character (no flashing)
5=0 0 0 1 0 1 : Light character (with flashing)
8=0 0 1 0 0 0 : Scroll a predetermined row to the left on the line display
16=0 1 0 0 0 0 : Scroll a predetermined row to the left on the CRT display
17=0 1 0 0 0 1 : Scroll up a predetermined column on the CRT display
18=0 1 0 0 1 0 : Scroll to the left on the CRT display
19=0 1 0 0 1 1 : Scroll to the right on the CRT display
20=0 1 0 1 0 0 : Scroll up on the CRT display.
```

In the case where the instruction is the preset screen or preset border (instruction 1 or 2), in the data region consisting of the 4th to 19th symbols in one pack, the three bits R S T in the fourth symbol are used as the data (COLOUR) to designate the colour and the other bits are all set to 0 as shown in Figure 7A. The preset screen (instruction 1) presets the screen regions on the line display and CRT display into the designated colour. The preset border (instruction 2) presets the border regions on the line display and CRT display into the designated colour.

In case of the light character (instruction 4), the data region in the pack has a format shown in Figure 7B. Three bits (COL 0) designates the background colour in the character and (COL 1) designates the foreground colour. RL and COLUMN-L denote the addresses of the character on the line display. ROW-C and COLUMN-C indicate the addresses of the character on the CRT display. $6 \times 12$ bits in the data region of the pack are the pixel data of the character, in which y indicates the left-most top pixel in the character and z represents the right-most bottom pixel in the character. The pixel 0 indicates the background colour, while the pixel 1 denotes the foreground colour. In addition, with respect to the character in case of the light character (with flashing) (instruction 5), the foreground colour and the background colour are alternately switched.

On the other hand, the instructions 8 and 16 shift the designated row to the left by one address. The instruction 17 shifts the designated column to the right by one address. The instruction 18 shifts all the characters on the CRT display to the left by one address. The instruction 19 shifts all the characters on the CRT display to the right by one address. The instruction 20 shifts all of the characters on the CRT display upwardly by one address. Although not shown, the data region of the pack is set to a predetermined format in correspondence with these instructions.

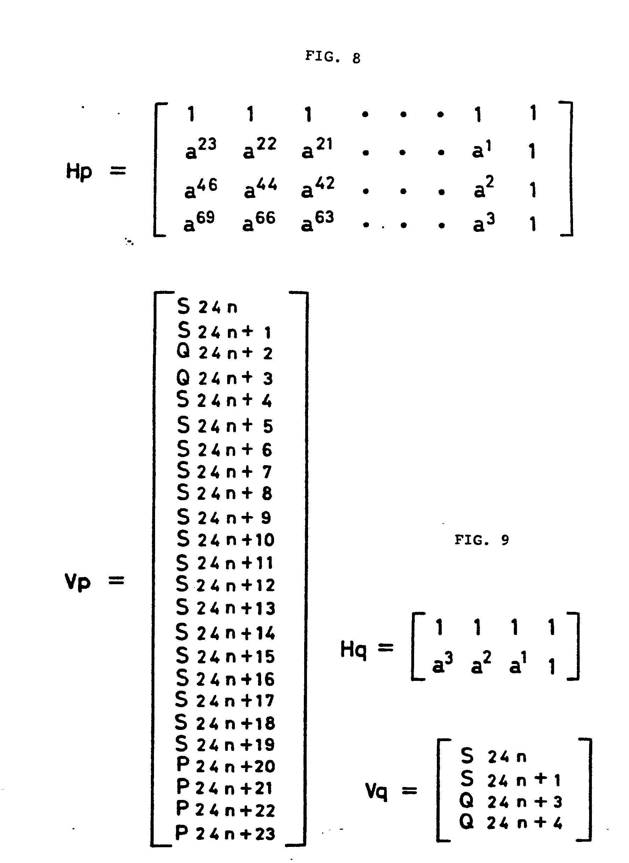

The error-correction codes for the above-mentioned sub-coding signal will now be described. Reed Solomon codes of (24, 20) are used as the error-correction codes for the pack consisting of $6 \times 24$ bits. These Reed Solomon codes are over a GF $(2^6)$, where GF denotes a Galois field, and have a polynomial of $P(X) = X^6 + X + 1$. As a parity check matrix Hp for the Reed Solomon codes, a matrix shown in Figure 8 is used. A primitive element a over GF $(2^6)$ is:

$$a = [0\ 0\ 0\ 0\ 1\ 0]$$

On the other hand, one pack of the reproduced data is expressed by a reproduced data matrix Vp as shown in Figure 8. Each suffix added to the twenty symbols denotes the symbol number of the sub-coding signal, and n in this suffix represents the number of the pack. $S24n$ is a command; $S24n+1$ is an instruction; $Q24n+2$ and $Q24n+3$ are parity symbols for this command and this instruction; and $P24n+20$, $P24n+21$, $P24n+22$ and $P24n+23$ are parity symbols for the pack as mentioned above. These parities of four symbols satisfy the relation $Hp \cdot Vp = 0$.

4

As the error-correction codes for the command and instruction, Reed Solomon codes of (4, 2) are used. These Reed Solomon codes are over a GF ($2^6$) and have a polynomial $P(X)=X^6+X+1$. A parity check matrix Hq and a reproduced data matrix Vq are shown in Figure 9. A primitive element a over a GF ($2^6$) is:

$$a=[0\ 0\ 0\ 0\ 1\ 0]$$

The parity symbols Q24n+2 and Q24n+3 satisfy the relation Hq . Vq=0. This relates to the case where n=2, k=2, m=16 and l=4.

It is possible to correct one or two symbol errors and to detect three or more symbol errors by use of the Reed Solomon codes including four P parity symbols. On the other hand, it is possible to correct one symbol error and to detect two or more symbol errors by use of the Reed Solomon codes including two Q symbols.

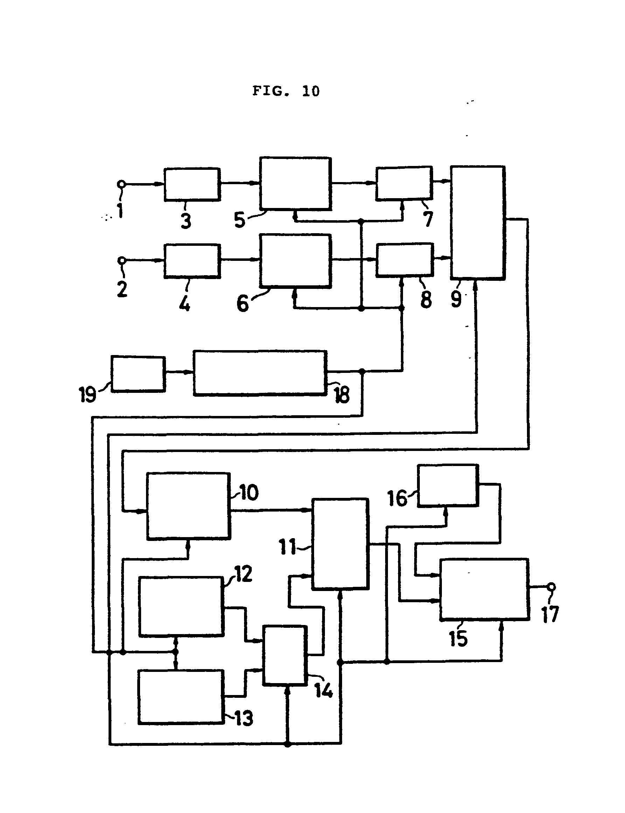

Figure 10 shows a fundamental arrangement for forming the data which are recorded on the compact disc. Two channel audio signals such as stereo audio signals are supplied to input terminals 1 and 2 from a source such as a tape recorder. The audio signals in the respective channels are supplied to sample-and-hold circuits 5 and 6 through low-pass filters 3 and 4. Each sample is further converted to sixteen bits by A/D converters 7 and 8. These two-channel audio PCM signals are converted to a one-channel audio PCM signal by a multiplexer 9, and this signal is supplied to an error-correcting encoder 10.

In the error-correcting encoder 10, the audio PCM signal is subjected to a cross-interleaving process and is encoded so that error correction by the Reed Solomon codes can be performed. In the cross-interleaving process, the data sequence is rearranged such that each symbol is included in two different error-correction code series. The output of the error-correcting encoder 10 is supplied to a multiplexer 11.

In addition, there are provided an encoder 12 for the P and Q channels of the sub-coding signals, and an encoder 13 for the R to W channels. Outputs of the encoders 12 and 13 are mixed by a multiplexer 14, and are supplied to the multiplexer 11. An output of the multiplexer 11 is supplied to a digital modulator 15, and is subjected to the EFM. A frame sync generated by a sync signal generator 16 is added, and the resulting signal is supplied to an output terminal 17. The encoder 12 for the P and Q channels adds the CRC codes of sixteen bits to the Q channel. The encoder 13 for the R to W channels performs the error-correction coding using the Reed Solomon codes and interleaving.

Clock pulses and timing signals produced by a timing generator 18 are supplied to each circuit such as the sample-and-hold circuits 5 and 6, the A/D converters 7 and 8, and the multiplexers 9, 11 and 14, etc. An oscillator 19 generates a master clock.

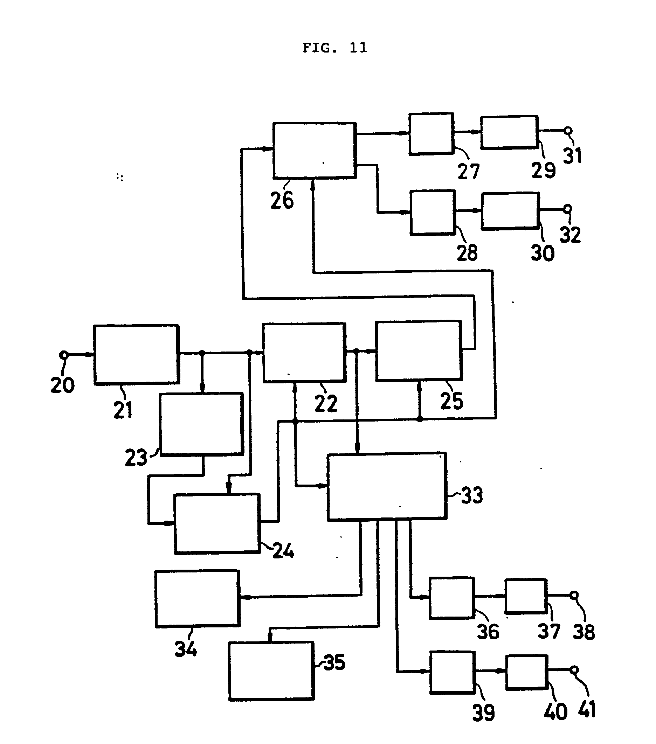

Figure 11 shows the arrangement of a reproducing system for processing the signals reproduced from the compact disc and supplied to an input terminal 20.

This reproduced signal is supplied through a waveform-shaping circuit 21 to a digital demodulator 22, a clock regenerating circuit 23, and a sync detecting circuit 24. A bit clock synchronized with the reproduced data is derived by the clock regenerating circuit 23 which is of phase locked loop form. Also, the sync detecting circuit 24 detects the frame sync and generates the timing signals synchronized with the reproduced data, and supplies a predetermined timing signal to each circuit of the reproducing system. The data in the main channel in an output of the digitla demodulator 22 are subjected to processing for error-detection, error-correction and interpolation in an error-correcting circuit 25. In addition, the sub-coding signals are subjected to processing for error-detection and error-correction in a decoder 33.

An output of the error-correcting circuit 25 is supplied to a demultiplexer 26 and is divided into two-channel signals. These signals in the respective channels are transmitted through D/A converters 27 and 28 and low-pass filters 29 and 30, so that the reproduced audio signals in the respective channels appear at output terminals 31 and 32.

The P and Q channel data of the sub-coding signals obtained from the decoder 33 are supplied to a system controller 34 comprising a microcomputer, and are used to perform the operations such as searching for the beginning of each piece of music, the random selection of pieces of music, and the like. The time code included in the Q channel is supplied to a display section 35 and is displayed.

In addition, the display data included in the R to W channels are converted to an analogue signal by a D/A converter 36. This analogue display signal is supplied to an output terminal 38 through a low-pass filter 37, and thence to the CRT display. Moreover, the audio data such as the explanation of music included in the R to W channels is supplied to an output terminal 41 through a D/A converter 39 and a low-pass filter 40, and is supplied to a loudspeaker through a low-frequency amplifier (not shown).

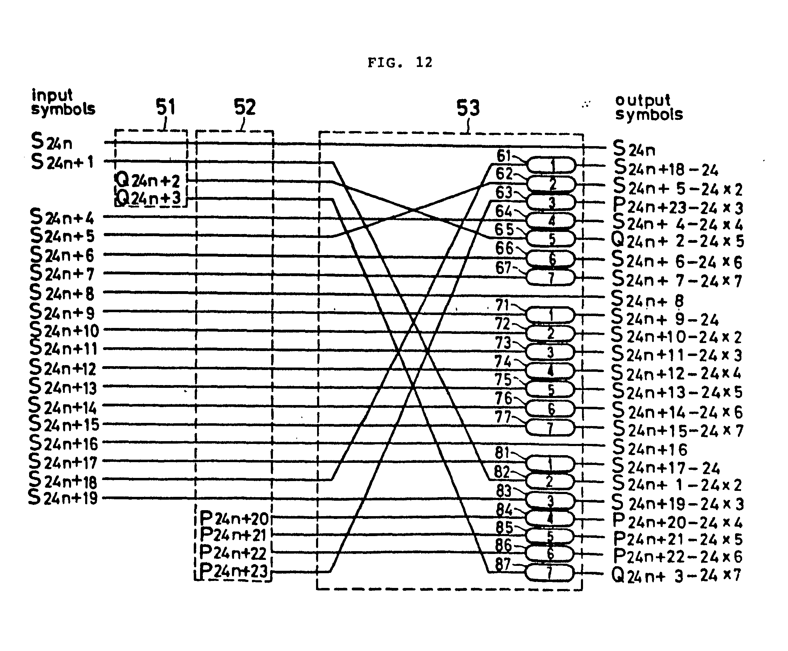

The encoder 13 for the R to W channels is provided with an error-correcting encoder shown in Figure 12.

As indicated by broken lines, the error-correcting encoder comprises a Q parity generator 51 for the above-mentioned Reed Solomon codes of (4, 2); a P parity generator 52 of the above-mentioned Reed Solomon codes of (24, 20); and an interleaving circuit 53. A total of eighteen symbols S24n, S24n+1 and S24n+4 to S24n+19 of the n-th pack are supplied to this error-correcting encoder.

Two symbols S24n and S24n+1 are supplied to the Q parity generator 51 and the parity symbols Q24n+2 and Q24n+3 are generated. Twenty symbols including these Q parities are supplied to the P parity generator 52, and four parity symbols are generated. 24 symbols from the P parity generator 52 are supplied to the interleaving circuit 53.

The interleaving circuit 53 is formed by a RAM and its address controller, and generates output data in which predetermined delays have been added to the respective symbols of the input data by controlling the write and read addresses. In Figure 12, means for causing predetermined delays of the respective symbols is represented as a plurality of delay elements for simplicity of understanding. As these delay elements, there are used delay elements 61, 71 and 81 to give a delay of one pack (24 symbols); delay elements 62, 72 and 82 to give a delay of two packs, delay elements 63, 73 and 83 to give a delay of three packs; delay elements 64, 74 and 84 to give a delay of four packs; delay elements 65, 75 and 85 to give a delay of five packs; delay elements 66, 76 and 86 to give a delay of six packs; and delay elements 67, 77 and 87 to give a delay of seven packs. On the other hand, the delay is zero for the symbols with no delay element. In this way, three sets of eight kinds of delays of zero to seven packs are provided.

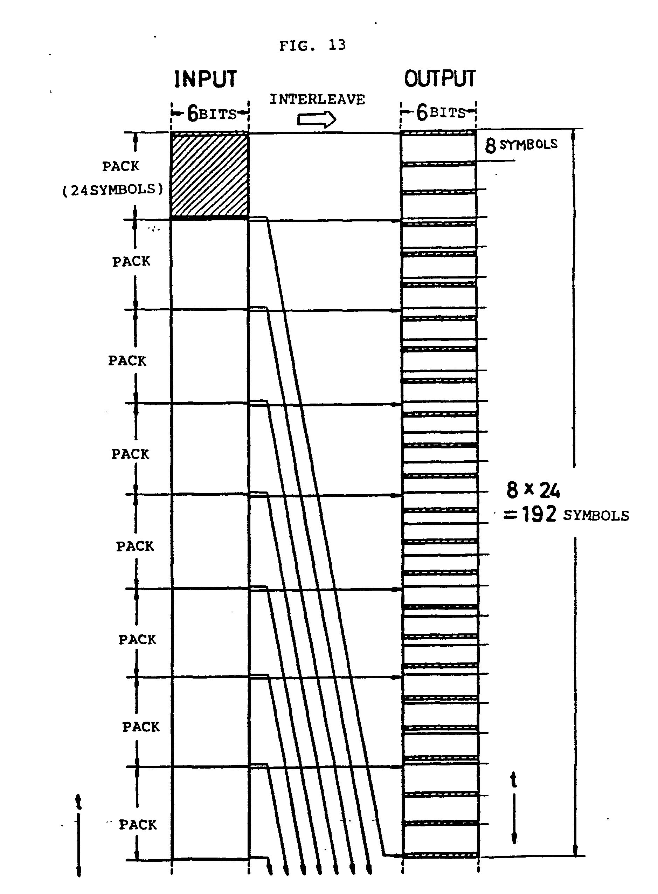

The interleaving circuit 53 performs the interleaving as shown in Figure 13 which shows in parallel eight consecutive packs of the input data series, and the output data series having the same length as that of the input data series. Now, considering the first pack (indicated hatched) of the input data series, the 24 symbols in this pack are distributed into the locations which are spaced from one another by only the distance of eight or nine symbols in the output data series. When the output data series is divided into equal parts at a distance of eight symbols, three symbols in the relevant pack are arranged as the first symbol in each of the first to third groups each formed of eight symbols. Three symbols of the above pack are arranged as the second symbol in each of the fourth to sixth groups each of which consists of eight symbols.

In the same manner as above, three symbols of the above pack are arranged into the locations which are shifted by one symbol at a time for every three groups each of which consists of eight symbols. Therefore, three symbols of the above pack are arranged as the eighth symbol in each group in the last three 8-symbol groups in the output data series shown in Figure 13. The symbols in the above pack are arranged at a spacing corresponding to the respective eight symbols in the 24 symbols consisting of these three 8-symbol groups. In addition, the spacing of nine symbols exists at the boundary portion of the three 8-symbol groups, since there is a shift of one symbol.

The symbols in a pluraity of packs with timings after the above pack are interleaved and arranged into the locations before the locations of the symbols in the above pack in the 8-symbol group, in a manner similar to the above pack. Moreover, the symbols in a plurality of packs with timings before the above pack are interleaved and arranged into the locations following the locations of the symbols in the above pack in the 8-symbol group in a manner similar to the above pack.

As a result of the measurement of errors which occur in the sub-coding signal reproduced from a compact disc, it has been found that a burst of error of four or more symbols seldom occurs. Therefore, by distributionally recording the 24 symbols included in the same series of the Reed Solomon codes of (24, 20) in the manner as described above, it is possible effectively to prevent two or more successive symbols being erroneous symbols, which would make error-correction impossible.

On the other hand, as shown in Figure 12, the interleaving circuit 53 performs the interleaving such as to increase the spacing between the symbols for the command and instruction, and for the Q-parity included in the same pack, as compared with the other symbols. As shown in Figure 12, for this purpose, the interleaving circuit 53 includes six oblique supply lines instead of all the supply lines for the input symbols being parallel.

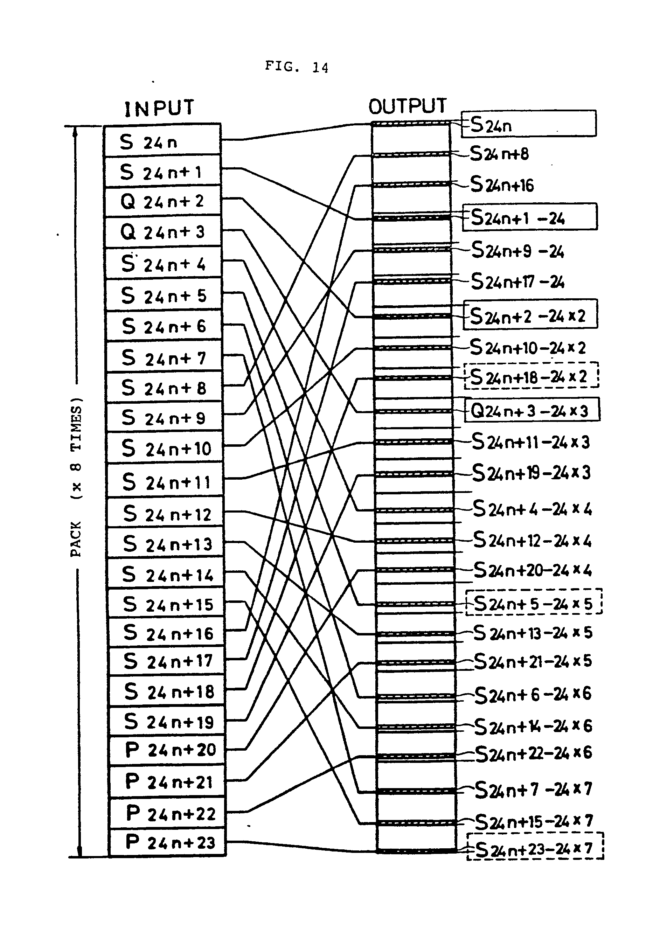

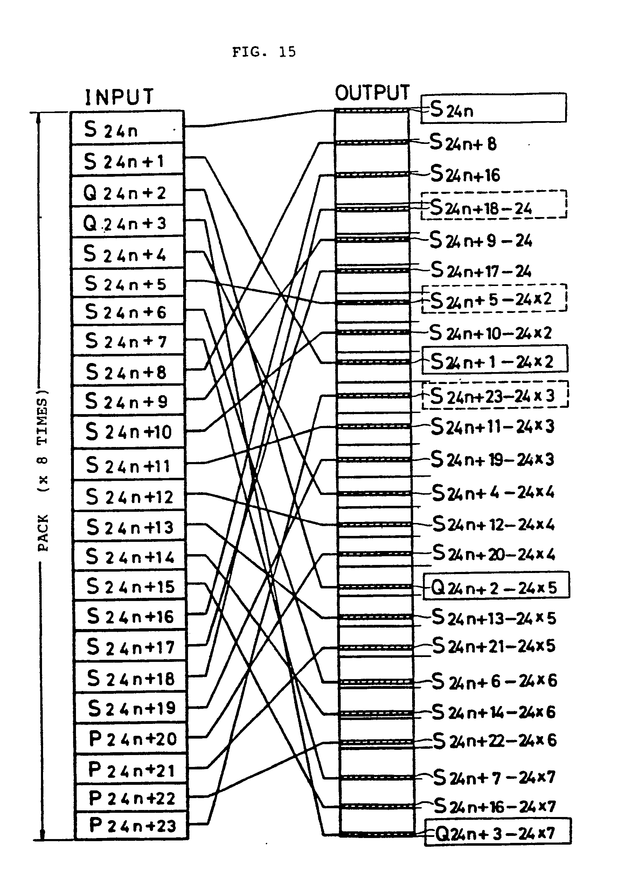

If all the supply lines for the input symbols were parallel (in order to clarify the feature of the interleaving), the correspondence between the 24 symbols in one pack and the data locations in the output series after the interleaving will be as shown in Figure 14. In Figure 14 and Figure 15 which will then be explained, the time width of one pack of the input data is enlarged eight times as compared with the inherent time width.

As shown in Figure 14, delays of zero, one pack, two packs, three packs, . . ., seven packs are respectively given to the first eight symbols $S24n$, $S24n+1$, $Q24n+2$, $Q24n+3$, . . ., $S24N+7$ of the input symbols. Thereafter, in the output data series, these eight symbols are changed such that their symbol numbers become $-24$, $-24\times2$, $-24\times3$, . . ., $-24\times7$. The delays of zero, one pack, . . ., seven packs are also respectively given to the next eight symbols. Similar delays are also given to the next eight symbols of $S24n+16$, . . ., $S24n+23$. As a result of such interleaving, the mutual spacing between the first four symbols in the pack are equal and are 24 symbols.

In one embodiment of the present invention, the interleaving circuit 53 used supplies the symbol $24n+1$ to a delay element 82; the symbol $S24n+18$ to the delay element 61; the symbol $Q24n+2$ to the delay element 65; the symbol $S24n+5$ to the delay element 62; the symbol $Q24n+3$ to a delay element 87; and the symbol $P24n+23$ to the delay element 63. Thus, the mutual locations of the above-mentioned pair of symbols are exchanged, and the correspondence relation between the input data series and the data series after the interleaving is as shown in Figure 15. As will be obvious from Figure 15, the mutual spacings of the first four symbols in the pack are as shown below:

Distance between $S24n$ and $S24n+1$: 65 symbols
Distance between $S24n+1$ and $Q24n+2$: 58 symbols
Distance between $Q24n+2$ and $Q24n+3$: 65 symbols.

In this way, the mutual spacings between the four symbols can be enlarged by twice or more as compared with 25 symbols, and it is possible to increase further the error-correcting capability with respect to a burst error occurring in the reproduced data.

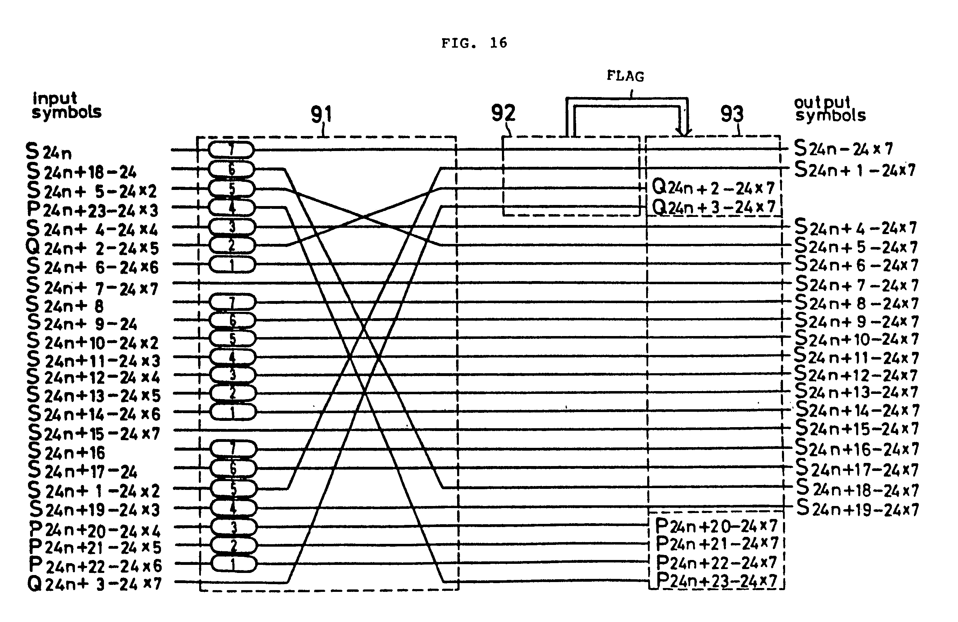

Figure 16 shows an error-correcting decoder for the R to W channels, provided in the decoder 33 for the sub-coding signal of the reproducing system.

As indicated by broken lines, this error-correcting decoder comprises a deinterleaving circuit 91 to which 24 symbols in one pack of the reproduced sub-coding signal are supplied, a Q-decoder 92 for the Reed Solomon codes of (4, 2) to which the first four symbols in an output of the deinterleaving circuit 91 are supplied; and a P-decoder 93 for the Reed Solomon codes of (24, 20) to which the symbols in one pack are supplied, wherein this one pack consists of the above-mentioned four symbols which were error-corrected by the decoder 92 and the twenty symbols from the deinterleaving circuit 91. A first flag (called a Q flag) indicative of the number (including zero) of erroneous symbols from the Q-decoder 92 is supplied to the P-decoder 93. Flags which are produced and represent the number (including zero) of erroneous symbols and the error locations and the Q flag are used for error correction in the P-decoder 93.

The input data to the deinterleaving circuit 91 corresponds to the output data of the interleaving circuit 53 of Figure 12. Deinterleaving such as to cancel the delays due to the interleaving circuit 53 and to cause each symbol to have the same delay of seven packs is executed. Actually, this deinterleaving is performed by controlling the write and read addresses of a RAM. In Figure 16, the deinterleaving circuit 91 is shown as an arrangement in which predetermined delays are arranged in the transmission of lines of the respective symbols. The delays of seven packs are respectively inserted into the transmission lines of the symbols whose delays are zero in the interleaving circuit 53. The delays of six packs, five packs, four packs, three packs, two packs and one pack are respectively inserted into the transmission lines of the symbols having the delays of one pack, two packs, three packs, four packs, five packs and six packs in the interleaving circuit 53. No delay element is inserted into the transmission line of the symbol having the delay of seven packs in the interleaving circuit 53.

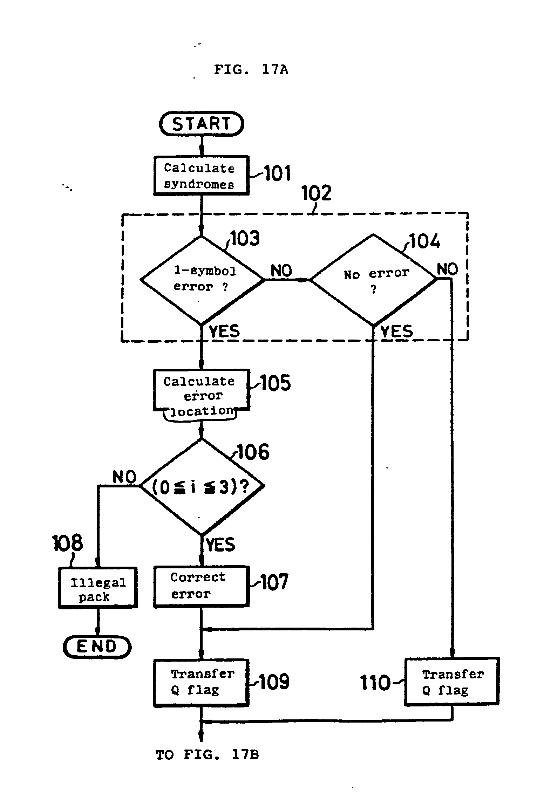

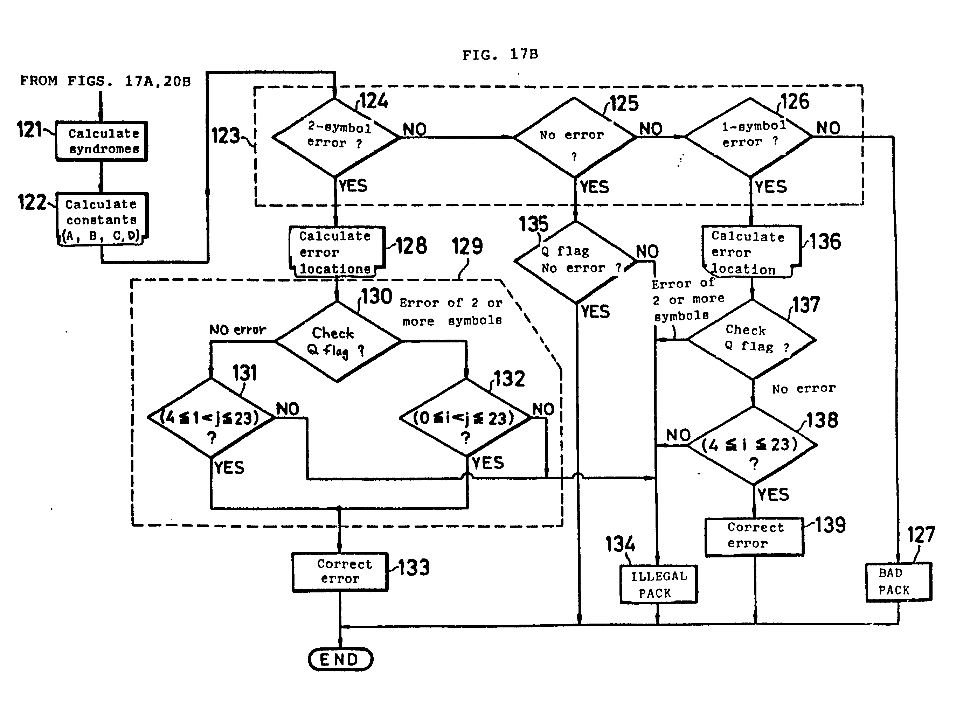

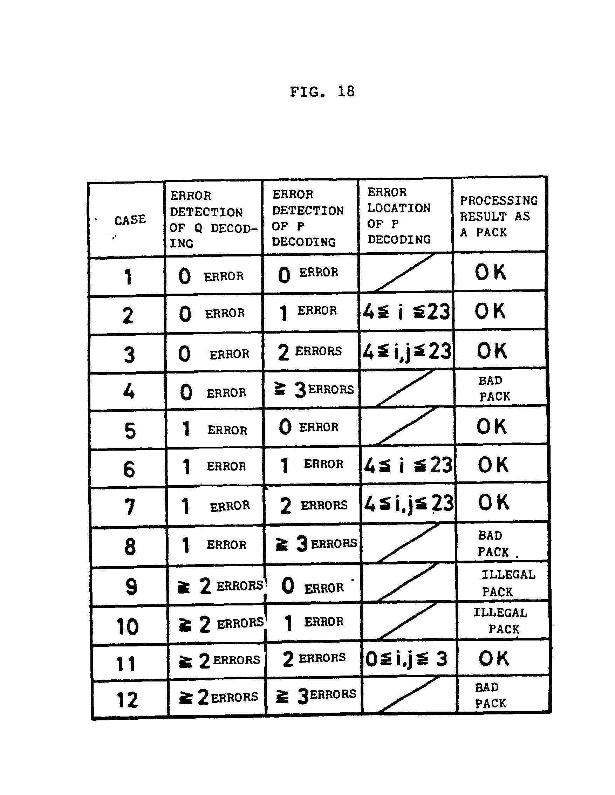

The error-correcting operations which are performed by the Q-decoder 92 and the P-decoder 93 will now be described with reference to a flowchart of Figures 17A and 17B, and a table of Figure 18.

Figure 17A shows the decoding process which is performed by the Q-decoder 92, and Figure 17B shows the decoding process which is performed by the P-decoder 93. Basically, the Q-decoder 92 can correct 1-symbol errors among the four symbols, while the P-decoder 93 can correct 1-symbol or 2-symbol errors among the 24 symbols. Firstly, syndromes Sr0 and Sr1 are produced by the Q-decoder 92 (step 101). This calculation is expressed by:

$$Sr0 = \sum_{i=0}^{3} Si$$

and

$$Sr1 = \sum_{i=0}^{3} \alpha^{3-i} Si$$

where i is a symbol number. The operations are all performed by mod. 2 addition. Next, the size of error is discriminated using these syndromes (step 102).

Discrimination is effected to see if the error is a 1-symbol error or not (step 103). In the case where it is not a 1-symbol error, it is checked to see if no error is detected (namely, Sr0=0 and Sr1=0) or not (step 104). In the case of a 1-symbol error, the calculation of the error location is performed (step 105). The error location is obtained by:

$$3 - \log \alpha \frac{Sr1}{Sr0} = i$$

The error location i obtained in this way is checked to see if it is included in the range of (0≤i≤3) or not (step 106).

In the case where the error location is included in this range, the error correction (step 107) is performed. Assuming that a reproduced symbol is $\overline{Si}$, the error correction is carried out by the operation of $\overline{Si} + Sr0 = Si$. If the error location i obtained is not included in the above range, the pack of these 24 symbols is regarded as an illegal (incorrect, and therefore no error correction should be performed) pack, so that all of the symbols are abandoned (step 108). Namely, the symbols in a pack where the command and instruction are no error are all considered to be invalid.

In addition, the Q flag indicating that no error is detected (including the case where the 1-symbol error was corrected) is transferred to the P-decoder 93 (step 109), and the Q flag representing the case where there is an error of two or more symbols is transferred to the P-decoder 93 (step 110).

7

As shown in Figure 17B, in the P-decoder 93, the syndromes Sr0, Sr1, Sr2 and Sr3 are first calculated as the following expressions (step 121):

$$Sr0= \sum_{i=0}^{23} Si$$

$$Sr1= \sum_{i=0}^{23} \alpha^{23-i}Si$$

$$Sr2= \sum_{i=0}^{23} \alpha^{2(23-i)}Si$$

$$Sr3= \sum_{i=0}^{23} \alpha^{3(23-i)}Si$$

The operations to obtain the size of error and the error location are performed using the four syndromes Sr0 to Sr3. In order to execute these operations simply and at a high speed, constants A, B, C and D as shown by the following expressions are calculated (step 122):

$$A=Sr0\ Sr2+Sr1^2$$

$$B=Sr1\ Sr2+Sr0\ Sr3$$

$$C=Sr1\ Sr3+Sr2^2$$

Next, the size of error is discriminated (step 123) using the above syndromes and constants. A second flag indicative of the size of error and the error location is formed by this discrimination, and the calculation for the error location which will be described below. By checking whether the relations $Sr0 \neq 0$, $Sr3 \neq 0$, $A \neq 0$, $B \neq 0$ and $C \neq 0$ are satisfied or not, discrimination is effected to see if the error is a 2-symbol error or not (step 124).

In the case where the error is not a 2-symbol error, discrimination is effected to see if the error is detected or not (step 125). When the relations $Sr0=0$, $Sr3=0$, $A=B=C=0$ are satisfied, it is determined that no error is detected.

In the case where an error is detected, it is checked to see if the error is a 1-symbol error or not (step 126). In the case where the relations $Sr0 \neq 0$, $Sr3 \neq 0$, $A=B=C=0$ are satisfied, the error is a 1-symbol error. When it is not a 1-symbol error, the error is an error of three or more symbols. Thus, it is processed (step 127) as a bad pack (incorrect pack). The symbols in the bad pack are all abandoned similar to the case of an illegal pack.

In case of a 2-symbol error, the calculation for the error location is performed (step 128). The error locations i and j are obtained as follows:

$$i=23-\log \alpha\left(\frac{B/A}{1+\alpha^{-(j-i)}}\right)$$

$$j=23-\log \alpha\left(\frac{B/A}{1+\alpha^{(j-i)}}\right)$$

These error locations i and j are checked to see if they are correct or not using the Q flag (step 129). The Q flag is checked to see if it indicates no error or an error of two or more symbols (step 130).

When the Q flag represents no error, the location step (step 131) is performed. When the relation $4 \leq i < j \leq 23$ is satisfied, the error location is correct, so that the 2-symbol error is corrected (step 133). In the case where the above relation is not satisfied, it is contradictory to the result of the error detection of the Q-decoder 92. Thus, the pack is processed as an illegal pack (step 134). This corresponds to the cases 3 and 7 in the table of Figure 18. In this case 7, one symbol at either one of the error locations 0 to 3 is corrected by the Q-decoder 92 and two symbols at the error locations included in 4 to 23 are corrected by the P-decoder 93, so that the error of three symbols in one pack can be corrected.

When the Q flag indicates the error of two or more symbols, the location check (step 132) is performed.

8

This location check is performed to check whether the relation $0 \leq i < j \leq 3$ is satisfied or not. If this relation is satisfied, the 2-symbol error will be corrected (step 133). This corresponds to the case 11 of Figure 18. Unless this relation is satisfied, the pack will be processed as an illegal pack.

The correction of the 2-symbol error (step 133) involves processing to obtain error patterns ei and ej, and adding them to the reproduced symbols. Namely:

$$ei = \frac{Sr1}{B/A} + \frac{Sr0}{1 + \alpha^{j-i}}$$

$$ej = \frac{Sr1}{B/A} + \frac{Sr0}{1 + \alpha^{-(j-i)}}$$

$$\overline{Si} + ei = Si$$

$$\overline{Sj} + ej = Sj$$

In the case where the result of the error detection by the P-decoder 93 indicates no error, the Q flag is checked to see if it indicates no error or not (step 135). When the Q flag indicates no error, this pack is determined such that this pack really includes no error symbol. This corresponds to the cases 1 and 5 in the table of Figure 18. On the contrary, when the Q flag represents the presence of an error of two or more symbols, it is contradictory to the decoding result by the P-decoder 93. Thus, the pack is processed as an illegal pack. This corresponds to the case 9 in the table of Figure 18.

When the result of the error detection by the P-decoder 93 indicates a 1-symbol error, the calculation for the error location i is performed (step 136). This calculation is as follows:

$$i = (23 - \log \alpha \, \frac{Sr1}{Sr0})$$

Next, the Q flag is checked. If the Q flag indicates no error, the location check (step 138) will be performed. When the relation of $4 \leq i \leq 23$ is satisfied, it is not inconsistent with the result of the Q decoding, so that the error correction of $(\overline{Si} + Sr0 = Si)$ is performed (step 139). This corresponds to the cases 2 and 6 in Figure 18. Unless the above-mentioned relation is satisfied, the pack will be processed as an illegal pack.

When the result of the P-decoder indicates a 1-symbol error and the Q flag represents an error of two or more symbols, this situation cannot result inherently. Therefore, the pack is processed as an illegal pack. This corresponds to the case 10 in Figure 18.

Moreover, as the result of the P decoding, when an error of three or more symbols is detected, the pack is processed as a bad pack (step 127). This corresponds to the cases 4, 8 and 12 in Figure 18.

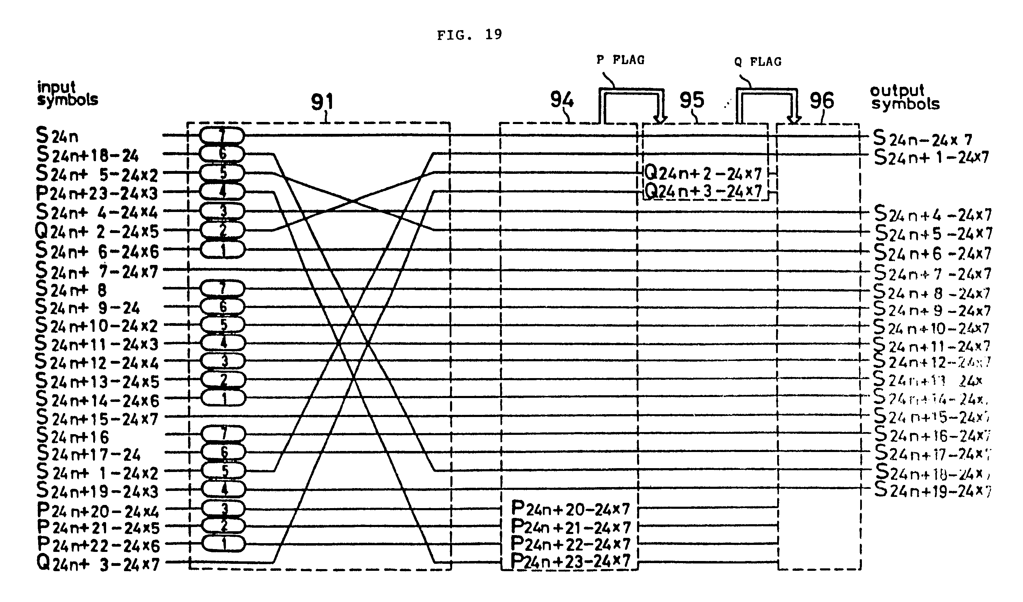

As shown in Figure 19, another error-correcting decoder comprises, in place of the Q-decoder 92 for the Reed Solomon codes of (4, 2) and the P-decoder 93 for the Reed Solomon codes of (24, 20) in Figure 16, a $P_1$-decoder 94 to which an output of the deinterleaving circuit 91 is supplied; a Q-decoder 95 for the Reed Solomon codes of (4, 2) to which the first four symbols in an output of the $P_1$-decoder 94 are supplied; and a $P_2$-decoder 96 for the Reed Solomon codes of (24, 20) to which the symbols in one pack are supplied, wherein this one pack consists of the above-mentioned four symbols on which the error correction has been performed by the Q-decoder 95, and twenty symbols from the $P_1$-decoder 94.

The $P_1$-decoder 94 detects a size of error and calculates the error locations in the respective cases of a 1-symbol error and a 2-symbol error with respect to 24 symbols in one pack. A flag (called a P flag) indicating this is supplied to the Q-decoder 95 which performs the error correction using this P flag. The Q-decoder 95 performs the error correction and generates a flag (called a Q flag) representing the number (including zero) of erroneous symbols. This Q flag is supplied to the $P_2$-decoder 96. A flag indicating the number (including zero) of erroneous symbols caused in the $P_2$-decoder 96 and the error locations and the Q flag are used for the error correction by the $P_2$-decoder 96. The error correcting operations which are performed by the $P_1$-decoder 94, the Q-decoder 95 and the $P_2$-decoder 96 will now be described in more detail.

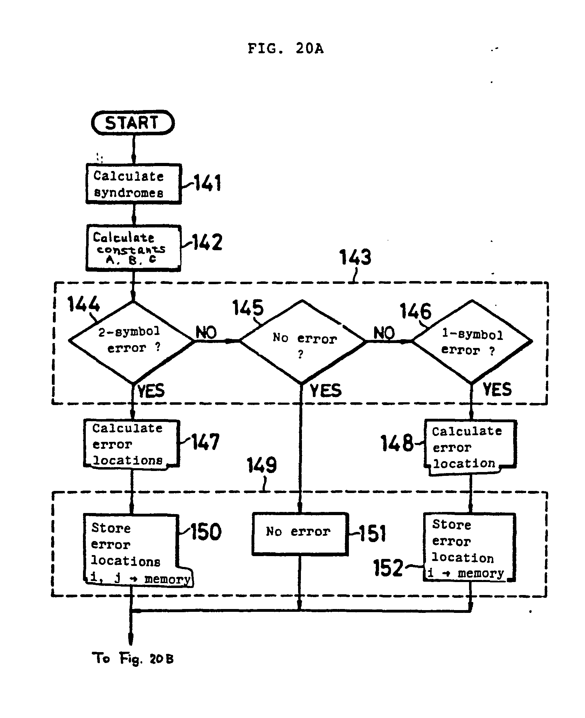

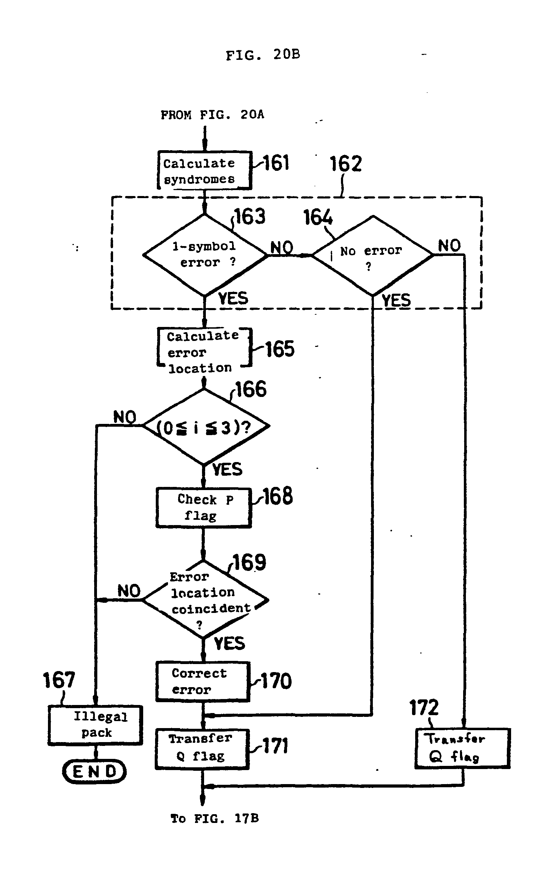

A flowchart in Figure 20A shows the decoding process which is executed by the $P_1$-decoder 94, and a flowchart in Figure 20B shows the decoding process which is performed by the Q-decoder 95. The decoding process which is carried out by the $P_2$-decoder 96 is the same as the flowchart in Figure 17B. Basically, the Q-decoder 95 can correct a 1-symbol error in the four symbols, while the $P_2$-decoder 96 can correct a 1-symbol or 2-symbol error in the 24 symbols. In the $P_1$-decoder 94, syndromes Sr0, Sr1, Sr2 and Sr3 are first produced (step 141). When the symbol location is expressed by i, these calculations are represented by the following expressions. In addition, the operations are all performed by mod. 2 addition:

$$Sr0 = \sum_{i=0}^{23} Si$$

$$Sr1 = \sum_{i=0}^{23} \alpha^{23-i} Si$$

$$Sr2 = \sum_{i=0}^{23} \alpha^{2(23-i)} Si$$

$$Sr3 = \sum_{i=0}^{23} \alpha^{3(23-i)} Si$$

The operations to obtain the size of error and the error location are performed using the four syndromes Sr0 to Sr3. In order to carry out these operations simply and at a high speed, the constants A, B and C as shown in the following expressions are calculated (step 142):

$$A = Sr0\ Sr2 + Sr1^2$$

$$B = Sr1\ Sr2 + Sr0\ Sr3$$

$$C = Sr1\ Sr3 + Sr2^2$$

Next, the size of error is discriminated (step 143) using the above syndromes and constants. Due to this discrimination and the calculations for the error locations which will be described below, the P flag representing the size of error and error locations is formed. The discrimination is effected to see if the error is a 2-symbol error or not (step 144) by checking whether the relations $Sr0 \neq 0$, $Sr3 \neq 0$, $A \neq 0$, $B \neq 0$ and $C \neq 0$ are satisfied or not.

When there is not a 2-symbol error, discrimination is effected to see if an error is detected or not (step 145). When the relations $Sr0 = 0$, $Sr3 = 0$, $A = B = C = 0$ are satisfied, it is determined that no error exists.

In the case of not no-error, discrimination is effected to see if there is a 1-symbol error or not (step 146). When the relations $Sr0 \neq 0$, $Sr3 \neq 0$, $A = B = C = 0$ are satisfied, the error is a 1-symbol error. If there is not a 1-symbol error, there is an error of three or more symbols.

In case of a 2-symbol error, the calculations for the error locations (step 147) are executed. The error locations i and j are obtained as follows:

$$i = 23 - \log \alpha\left(\frac{B/A}{1 + \alpha^{-(j-i)}}\right)$$

$$j = 23 - \log \alpha\left(\frac{B/A}{1 + \alpha^{(j-i)}}\right)$$

On the other hand, in case of a 1-symbol error, the calculation for the error location (step 148) is performed. The error location i is obtained by:

$$i = 23 - \log \alpha\frac{Sr1}{Sr0}$$

The P flag obtained by the $P_1$-decoder 94 in this way is transferred to the Q-decoder 95 at the next stage (step 149). Namely, the error locations of a 1-symbol error or a 2-symbol error are stored in the memory (steps 150 and 152) and a flag indicative of no-error is generated (step 151).

In the Q-decoder 95, as shown in Figure 20B, the syndromes Sr0 and Sr1 are first produced (step 161). These calculations are represented by:

# EP 0 144 431 B1

$$Sr0= \sum_{i=0}^{3} Si$$

and

$$Sr1= \sum_{i=0}^{3} \alpha^{3-i}Si$$

Next, the size of error is discriminated (step 162) using these syndromes.

Discrimination is effected to see if the error is a 1-symbol error or not (step 163). When the error is not a 1-symbol error, discrimination is effected to see if it is no-error (that is, $Sr0=0$ and $Sr1=0$) or not (step 164). In case of a 1-symbol error, the calculation for the error location (step 165) is performed. The error location i is obtained by:

$$3-\log \alpha \frac{Sr1}{Sr0} =i$$

The error location i obtained in this way is checked to see if it is included in the range of ($0 \leq i \leq 3$) or not (step 166).

When the error location i is included in this range, the P flag is checked (step 168) to see if the location i coincides with the error location by the P flag or not (step 169). When they are coincident, the error correction (step 170) is executed. When the syndrome is $\overline{Si}$, the error correction is performed by the operation of $\overline{Si}+Sr0=Si$. In the case where the error location i derived is not included in the above-mentioned range or where the error location does not coincide with that by the P flag, the pack including those 24 symbols is regarded as an illegal (incorrect, and therefore error correction should not be performed) pack, so that all of the symbols are abandoned (step 167). Namely, the symbols in the pack when the command and instruction are errors are all determined to be invalid.

In addition, the Q flag indicative of no-error (including the case where a 1-symbol error was corrected) is transferred to the $P_2$-decoder 96 (step 171). The Q flag representing the case where an error of two or more symbols exists is transferred to the $P_2$-decoder 96 (step 172).

In the $P_2$-decoder 96, decoding similar to that by the P-decoder as shown in Figure 17B is carried out.

As another alternative, in the error-correcting decoder, a 1-symbol error or a 2-symbol error may be corrected only in the case where the error locations obtained lie within 4 to 23 in the $P_1$-decoder 94 to which the 24 symbols in one pack are supplied.

On the other hand, the $P_2$-decoder 96 may be omitted if the $P_1$-decoder 94 performs only the detection of the size of error and error location as described above, or it corrects the erroneous symbols at the error locations 4 to 23.

Also, other codes such as adjacent codes may be used as the first and second error-correction codes. The first codes may be codes, such as CRC codes or simple parities, having only the error detecting function. Moreover, error-correction codes on a bit unit basis, such as the BCH codes may be used.

According to embodiments of the present invention, in the case where the error-detection or error-correction coding is performed with respect to (n+k) symbols of (n+k+m+l) symbols on which the error correction coding was carried out, a flag indicating the number of erroneous symbols in the (n+k) symbols is first generated, this flag is used for the error correction of the (n+k+m+l) symbols at the next stage, or the size of error and error locations are detected with respect to the (n+k+m+l) symbols and the error correction of the (n+k) symbols can be checked using the result of this detection. Therefore, the error-correcting capability can be improved, and it is possible to prevent wrong error correction. In addition, in performing the error-correction of the (n+k) symbols, it is possible to detect that this error correction is wrong, and this makes it possible to raise the error-detecting capability with regard to data having high significance, such as the symbols relating to the operating mode and the control content in the sub-coding signal of a compact disc.

## Claims

1. An apparatus for correcting errors in data encoded by a process comprising generating a first block code comprising k first parity symbols (Q) relating to n input symbols and generating a second block code comprising l second parity symbols (P) relating to at least said n+k symbols, said apparatus comprising:

first and second decoders (92) responsive to said first and second block codes respectively and generating signals representing a number of error symbols and their locations;

the error-correction control including both detection of errors using one of said signals and detection of errors using both of said signals; the apparatus being characterized in that:

said symbols supplied to said apparatus comprise second blocks of n+k+m+l symbols, said n symbols representing information which is more significant than the information represented by said m symbols; said l second parity symbols relate to said n+k+m symbols;

11

said first decoder (92) derives in dependence on said first block code within said second block a first signal representing the number, including zero, of error symbols in said n+k symbols;

said second decoder (93) then derives in dependence on said second block code, a second signal representing the number, including zero, of error symbols, before error-correction by said second decoder (93), in said n+k+m+l symbols; and

the error correction processing by said second decoder (93) is controlled by said first and second signals.

2. An error-correcting apparatus according to claim 1 wherein said n+k+m+l symbols are the data which are recorded as the sub-channel of a disc on which an information signal is recorded as the main channel, and said n symbols are the control data for said sub-channel.

3. An apparatus for correcting errors in data encoded by a process comprising generating a first block code comprising k first parity symbols (Q) relating to n input symbols and generating a second block code comprising l second parity symbols (P) relating to at least said n+k symbols, said apparatus comprising:

first and second decoders (94, 95) responsive to said first and second block codes respectively and generating signals representing a number of error symbols and their locations;

the error-correction control including both detection of errors using one of said signals and detection of errors using both of siad signals; the apparatus being characterized in that:

said symbols supplied to said appratus comprise second blocks of n+k+m+l symbols, said n symbols representing information which is more significant than the information represented by said m symbols;

said l second parity symbols relate to said n+k+m symbols;

said first decoder (94) derives in dependence on said second block code a first signal representing the number, including zero, of error symbols in said n+k+m+l symbols;

said second decoder (95) then derives in dependence on said first block code a second signal representing the number, including zero, of error symbols, before error-correction by said second decoder (95), in said n+k symbols; and

the error correction processing by said second decoder (93) is controlled by said first and second signals.

4. Apparatus according to claim 3 further comprising a third decoder (96) to which said n+k+m+l symbols are supplied from said first and second decoders (94, 95) and which performs error-correction using said second signal.

5. Apparatus according to claim 3 or claim 4 wherein said first decoder (94) performs error detection on said n+k+m+l symbols and performs error-correction on said m+l symbols.

6. Apparatus according to claim 3, claim 4 or claim 5 wherein said n+k+m+l symbols are the data which are recorded as the sub-channel of a disc on which an information signal is recorded as the main channel, and said n symbols are the control data for said sub-channel.

**Patentansprüche**

1. Vorrichtung zum Korrigieren von Fehlern in Daten, die durch ein Verfahren kodiert werden, das die Erzeugung eines ersten Blockkodes mit k ersten Paritätssymbolen (Q) in Bezug auf n Eingabesymbolen und die Erzeugung eines zweiten Blockkodes mit 1 zweiten Partitätssymbolen (P) in Bezug auf wenigstens die n+k Symbole aufweist, wobei die Vorrichtung aufweist:

einen ersten und zweiten Dekodierer (92), die auf den ersten bzw. zweiten Blockkode ansprechen und Signale erzeugen, die eine Anzahl Fehlersymbole und deren Lage darstellen, wobei

die Fehlerkorrektursteuerung sowohl die Erfassung von eines der Signale benutzenden Fehlern als auch die Erfassung von beide Signale benutzenden Fehlern aufweist, wobei

die Vorrichtung dadurch gekennzeichnet ist, daß

die der Vorrichtung zugeführten Symbole zweite Blöcke von n+k+m+l Symbolen aufweisen, wobei die n Symbole eine Information darstellen, die signifikanter als die durch die m Symbole dargestellte Information ist, daß

sich die 1 zweiten Paritätssymbole auf die n+k+m Symbole beziehen, daß

der erste Dekodierer (92) in Abhängigkeit von dem ersten Blockkode innerhalb des zweiten Blockkodes ein erstes Signal ableitet, das die die Null einschließende Anzahl von Fehlersymbolen in den n+k Symbolen darstellt, daß

der zweite Dekodierer (93) dann in Abhängigkeit von dem zweiten Blockkode ein zweites Signal ableitet, das die die Null einschließende Anzahl von Fehlersymbolen vor der Fehlerkorrektur durch den zweiten Dekodierer (93) in den n+k+m+l Symbolen darstellt, und daß

die Fehlerkorrekturverarbeitung durch den zweiten Dekodierer (93) durch die ersten und zweiten Signale gesteuert ist.

2. Fehlerkorrekturvorrichtung nach Anspruch 1, wobei die n+k+m+l Symbole Daten sind, die als der Unterkanal einer Scheibe aufgezeichnet sind, auf welcher ein Informationssignal als der Hauptkanal aufgezeichnet ist, und wobei die n Symbole die Steuerdaten für den Unterkanal sind.

3. Vorrichtung zum Korrigieren von Fehlern in Daten, die durch ein Verfahren kodiert werden, das die Erzeugung eines ersten Blockkodes mit k ersten Paritätssymbolen (Q) in Bezug n Eingabesymbolen und die Erzeugung eines zweiten Blockkodes mit 1 zweiten Paritätssymbolen (P) in Bezug auf wenigstens die n+k

EP 0 144 431 B1

Symbole aufweist, wobei die Vorrichtung aufweist:

einen ersten und zweiten Dekodierer (94, 95), die auf den ersten bzw. zweiten Blockkode ansprechen und Signale erzeugen, welche eine Anzahl Fehlersymbole und deren Lagen darstellen, wobei

die Fehlerkorrektursteuerung sowohl die Erfassung von eines der Signale benutzenden Fehlern als auch die Erfassung von beide Signale benutzenden Fehlern aufweist, wobei

die Vorrichtung dadurch gekennzeichnet ist, daß

die der Vorrichtung zugeführten Symbole zweite Blöcke von n+k+m+l Symbolen aufweisen, wobei die n Symbole eine Information darstellen, die signifikanter als die durch die m Symbole dargestellte Information ist, daß

sich die l zweiten Paritätssymbole auf die n+k+m Symbole beziehen, daß

der erste Dekodierer (94) in Abhängigkeit von dem zweiten Blockkode ein erstes Signal ableitet, das die die Null einschließende Anzahl von Fehlersymbolen in den n+k+m+l Symbolen darstellt, daß

der zweite Dekodierer (95) dann in Abhängigkeit von dem ersten Blockkode ein zweites Signal ableitet, das die die Null einschließende Anzahl von Fehlersymbolen vor der Fehlerkorrektur durch den zweiten Dekodierer (95) in den n+k Symbolen darstellt, und daß

die Fehlerkorrekturverarbeitung durch den zweiten Dekodierer (93) durch das erste und zweite Signal gesteuert ist.

4. Vorrichtung nach Anspruch 3, wobei ein dritter Dekodierer (96) vorgesehen ist, dem die n+k+m+l Symbole von dem ersten und zweiten Dekodierer (94, 95) zugeführt sind und der eine Fehlerkorrektur unter Benutzung des zweiten Signales ausführt.

5. Vorrichtung nach Anspruch 3 oder 4, wobei der erste Dekodierer (94) eine Fehlererfassung an den n+k+m+l Symbolen und eine Fehlerkorrektur an den m+l Symbolen ausführt.

6. Vorrichtung nach Anspruch 3, 4 oder 5, wobei die n+k+m+l Symbole die Daten sind, welche als Unterkanal einer Scheibe aufgezeichnet sind, auf welcher ein Informationssignal als der Hauptkanal aufgezeichnet ist, und wobei die n Symbole die Steuerdaten für den Unterkanal sind.

**Revendications**

1. Dispositif pour corriger des erreurs dans des données codées par un procédé consistant à générer un premier code de bloc comprenant k premiers symboles de parité (Q) relatifs à n symboles d'entrée et à générer un deuxième code de bloc comprenant l deuxièmes symboles de parité (P) relatifs à au moins les (n+k) symboles, le dispositif comprenant:

des premier et deuxième décodeurs (92, 93) réagissant aux premier et deuxième codes de bloc respectivement et engendrant des signaux représentant un nombre de symboles erronés et leurs emplacements;

la commande de correction d'erreurs incluant à la fois la détection d'erreurs par la mise en oeuvre d'un des signaux et la détection d'erreurs par la mise en oeuvre des deux signaux;

le dispositif étant caractérisé en ce que:

les symboles fournis au dispositif comprennent des deuxièmes blocs de (n+k+m+l) symboles, les n symboles représentant une information qui est de poids plus fort que l'information représentée par les m symboles;

les l deuxièmes symboles de parité sont relatifs aux (n+k+m) symboles;

le premier décodeur (92) dérive en fonction du premier code de bloc dans le deuxième bloc un premier signal représentant le nombre, y compris zéro, de symboles erronés dans les (n+k) symboles;

le deuxième décodeur (93) dérive ensuite en fonction du deuxième code de bloc, un deuxième signal représentant le nombre, y compris zéro, de symboles erronés, avant une correction d'erreurs par le deuxième décodeur (39), dans les (n+k+m+l) symboles; et

l'opération de correction d'erreurs par le deuxième décodeur (93) est commandée par les premier et deuxième signaux.

2. Dispositif de correction d'erreurs selon la revendication 1, dans lequel les (n+k+m+l) symboles sont les données qui sont enregistrées comme sous-canal d'un disque sur lequel est enregistré un signal d'information comme canal principal, et les n symboles sont les données de commande pour le sous-canal.

3. Dispositif pour corriger des erreurs dans des données codées par un procédé consistant à générer un premier code de bloc comprenant k premiers symboles de parité (Q) relatifs à n symboles d'entrée et à générer un deuxième code de bloc comprenant l deuxièmes symboles de parité (P) relatifs à au moins les (n+k) symboles, le dispositif comprenant:

des premier et deuxième décodeurs (94, 95) réagissant aux premier et deuxième codes de bloc respectivement et engendrant des signaux représentant un nombre de symboles erronés et leurs emplacements;

la commande de correction d'erreurs incluant à la fois la détection d'erreurs par la mise en oeuvre d'un des signaux et la détection d'erreurs par la mise en oeuvre des deux signaux;

le dispositif étant caractérisé en ce que:

les symboles fournis au dispositif comprennent des deuxièmes blocs de (n+k+m+l) symboles, les n symboles représentant une information qui est de poids plus fort que l'information représentée par les m symboles;

13

les l deuxièmes symboles de parité sont relatifs aux (n+k+m) symboles;

le premier décodeur (94) dérive en fonction du deuxième code de bloc un premier signal représentant le nombre, y compris zéro, de symboles erronés dans les (n+k+m+l) symboles;

le deuxième décodeur (95) dérive ensuite en fonction du premier code de bloc un deuxième signal représentant le nombre, y compris zéro, de symboles erronés, avant une correction d'erreurs par le deuxième décodeur (95), dans les (n+k) symboles; et

l'opération de correction d'erreurs par le deuxième décodeur (93) est commandée par les premier et deuxième signaux.

4. Dispositif selon la revendication 3, comprenant en outre un troisième décodeur (96) auquel sont fournis les (n+k+m+l) symboles par les premier et deuxième décodeurs (94, 95) et qui exécute une correction d'erreurs par la mise en oeuvre du deuxième signal.

5. Dispositif selon l'une quelconque des revendications 3 et 4, dans lequel le premier décodeur (94) exécute une détection d'erreurs sur les (n+k+m+l) symboles et exécute une correction d'erreurs sur les (m+l) symboles.

6. Dispositif selon l'une quelconque des revendications 3 à 5, dans lequel les (n+k+m+l) symboles sont les données qui sont enregistrées comme sous-canal d'un disque sur lequel un signal d'information est enregistré comme canal principal, et les n symboles sont les données de commande pour le sous-canal.

# EP 0 144 431 B1

## FIG. 1

FIG. 1

## FIG. 2

FIG. 2

FIG. 3A

SYMBOL
NO          R    S    T    U    V    W

0                    COMMAND
1
.                      DATA                    20 SYMBOLS
PACK    .
19
.                     PARITY                   4 SYMBOLS
23
0                    COMMAND
1
.                      DATA                    20 SYMBOLS
PACK    .
19
.                     PARITY                   4 SYMBOLS
PACKET  23                                                96 SYMBOLS
0                    COMMAND
1
.                      DATA                    20 SYMBOLS
PACK    .
19
.                     PARITY                   4 SYMBOLS
23
0                    COMMAND
1
.                      DATA                    20 SYMBOLS
PACK    .
19
.                     PARITY                   4 SYMBOLS
23

FIG. 3B       R    S    T    U    V    W

| msb    lsb | msb    lsb |
|:----------:|:----------:|
| MODE       | ITEM       |

FIG. 4

( ZERO MODE )

| | R | S | T | U | V | W |
|---|---|---|---|---|---|---|
| SYMBOL | | | | | | |
| 0 | MODE | | | ITEM | | |
| 1 | 0 | 0 | 0 | 0 | 0 | 0 |
| 2 | | | | | | |
| . | | | | | | |
| . | | | | | | |
| . | | | | | | |
| . | | | | | | |
| . | | | | | | |
| 23 | | | | | | |
| 24 | 0 | 0 | 0 | 0 | 0 | 0 |

(GRAPHIC MODE)

| | R | S | T | U | V | W |
|---|---|---|---|---|---|---|
| SYMBOL | | | | | | |
| 0 | MODE | | | ITEM | | |
| 1 | INSTRUCTION | | | | | |
| 2 | PARITY | | | | | |
| 3 | PARITY | | | | | |
| 4 | | | | | | |
| . | | | | | | |
| . | | | DATA | | | |
| . | | | | | | |
| 19 | | | | | | |
| 20 | PARITY | | | | | |
| 21 | PARITY | | | | | |
| 22 | PARITY | | | | | |
| 23 | PARITY | | | | | |

FIG. 5A

FIG. 5B

4

FIG. 6

| R | G | B | COLOR |
|---|---|---|---|
| 0 | 0 | 0 | BLACK |
| 0 | 0 | 1 | BLUE |
| 0 | 1 | 0 | GREEN |
| 0 | 1 | 1 | CYAN |
| 1 | 0 | 0 | RED |
| 1 | 0 | 1 | MAGENTA |
| 1 | 1 | 0 | YELLOW |
| 1 | 1 | 1 | WHITE |

FIG. 7A

| Symbol | R | S | T | U | V | W |
|---|---|---|---|---|---|---|
| 4 | COLOR | | | 0 | 0 | 0 |
| 5 | 0 | 0 | 0 | 0 | 0 | 0 |
| : | : | | : | : | | : |
| 19 | 0 | 0 | 0 | 0 | 0 | 0 |

FIG. 7B

| Symbol | R | S | T | U | V | W |
|---|---|---|---|---|---|---|
| 4 | COL 0 | | | COL 1 | | |
| 5 | RL | 0 | ROW C | | | |
| 6 | COLUMN L | | | | | |
| 7 | COLUMN C | | | | | |
| 8 | y | | | | | |
| : | | | FONT | | | |
| : | | | DATA | | | |
| 19 | | | | | | z |

FIG. 8

$$Hp = \begin{bmatrix} 1 & 1 & 1 & \bullet & \bullet & \bullet & 1 & 1 \\ a^{23} & a^{22} & a^{21} & \bullet & \bullet & \bullet & a^1 & 1 \\ a^{46} & a^{44} & a^{42} & \bullet & \bullet & \bullet & a^2 & 1 \\ a^{69} & a^{66} & a^{63} & \bullet & \bullet & \bullet & a^3 & 1 \end{bmatrix}$$

$$Vp = \begin{bmatrix} S\ 24\,n \\ S\ 24\,n+1 \\ Q\ 24\,n+2 \\ Q\ 24\,n+3 \\ S\ 24\,n+4 \\ S\ 24\,n+5 \\ S\ 24\,n+6 \\ S\ 24\,n+7 \\ S\ 24\,n+8 \\ S\ 24\,n+9 \\ S\ 24\,n+10 \\ S\ 24\,n+11 \\ S\ 24\,n+12 \\ S\ 24\,n+13 \\ S\ 24\,n+14 \\ S\ 24\,n+15 \\ S\ 24\,n+16 \\ S\ 24\,n+17 \\ S\ 24\,n+18 \\ S\ 24\,n+19 \\ P\ 24\,n+20 \\ P\ 24\,n+21 \\ P\ 24\,n+22 \\ P\ 24\,n+23 \end{bmatrix}$$

FIG. 9

$$Hq = \begin{bmatrix} 1 & 1 & 1 & 1 \\ a^3 & a^2 & a^1 & 1 \end{bmatrix}$$

$$Vq = \begin{bmatrix} S\ 24\,n \\ S\ 24\,n+1 \\ Q\ 24\,n+3 \\ Q\ 24\,n+4 \end{bmatrix}$$

6

FIG. 10

FIG. 11

FIG. 12

EP 0 144 431 B1

FIG. 13

FIG. 14

INPUT

| S 24n |
| S 24n+1 |
| Q 24n+2 |
| Q 24n+3 |
| S 24n+4 |
| S 24n+5 |
| S 24n+6 |
| S 24n+7 |
| S 24n+8 |
| S 24n+9 |
| S 24n+10 |
| S 24n+11 |
| S 24n+12 |
| S 24n+13 |
| S 24n+14 |
| S 24n+15 |
| S 24n+16 |
| S 24n+17 |
| S 24n+18 |
| S 24n+19 |
| P 24n+20 |
| P 24n+21 |
| P 24n+22 |
| P 24n+23 |

PACK ( x 8 TIMES )

OUTPUT

S 24n
S 24n+8
S 24n+16
S 24n+1 −24
S 24n+9 −24
S 24n+17 −24
S 24n+2 −24×2
S 24n+10−24×2
S 24n+18−24×2
Q 24n+3 −24×3
S 24n+11−24×3
S 24n+19−24×3
S 24n+4 −24×4
S 24n+12−24×4
S 24n+20−24×4
S 24n+5 −24×5
S 24n+13−24×5
S 24n+21−24×5
S 24n+6 −24×6
S 24n+14−24×6
S 24n+22−24×6
S 24n+7 −24×7
S 24n+15−24×7
S 24n+23−24×7

FIG. 15

INPUT

| S 24n |
| S 24n+1 |
| Q 24n+2 |
| Q 24n+3 |
| S 24n+4 |
| S 24n+5 |
| S 24n+6 |
| S 24n+7 |
| S 24n+8 |
| S 24n+9 |
| S 24n+10 |
| S 24n+11 |
| S 24n+12 |
| S 24n+13 |
| S 24n+14 |
| S 24n+15 |
| S 24n+16 |
| S 24n+17 |
| S 24n+18 |
| S 24n+19 |
| P 24n+20 |
| P 24n+21 |
| P 24n+22 |
| P 24n+23 |

PACK (x 8 TIMES)

OUTPUT

S 24n
S 24n+8
S 24n+16
S 24n+18−24
S 24n+9 − 24
S 24n+17−24
S 24n+ 5 −24×2
S 24n+10−24×2
S 24n+ 1 −24×2
S 24n+23−24×3
S 24n+11−24×3
S 24n+ 19−24×3
S 24n+ 4 −24×4
S 24n+ 12−24×4
S 24n+20−24×4
Q 24n+ 2 −24×5
S 24n+13−24×5
S 24n+21−24×5
S 24n+ 6 −24×6
S 24n+14−24×6
S 24n+22−24×6
S 24n+ 7 −24×7
S 24n+16−24×7
Q 24n+ 3 −24×7

12

FIG. 16

input symbols

S 24n
S 24n+18−24
S 24n+ 5−24×2
P 24n+23−24×3
S 24n+ 4−24×4
Q 24n+ 2−24×5
S 24n+ 6−24×6
S 24n+ 7−24×7
S 24n+ 8
S 24n+ 9−24
S 24n+10−24×2
S 24n+11−24×3
S 24n+12−24×4
S 24n+13−24×5
S 24n+14−24×6
S 24n+15−24×7
S 24n+16
S 24n+17−24
S 24n+ 1−24×2
S 24n+19−24×3
P 24n+20−24×4
P 24n+21−24×5
P 24n+22−24×6
Q 24n+ 3−24×7

FLAG

91    92    93

output symbols

S 24n−24×7
S 24n+ 1−24×7
Q 24n+ 2−24×7
Q 24n+ 3−24×7
S 24n+ 4−24×7
S 24n+ 5−24×7
S 24n+ 6−24×7
S 24n+ 7−24×7
S 24n+ 8−24×7
S 24n+ 9−24×7
S 24n+10−24×7
S 24n+11−24×7
S 24n+12−24×7
S 24n+13−24×7
S 24n+14−24×7
S 24n+15−24×7
S 24n+16−24×7
S 24n+17−24×7
S 24n+18−24×7
S 24n+19−24×7
P 24n+20−24×7
P 24n+21−24×7
P 24n+22−24×7
P 24n+23−24×7

EP 0 144 431 B1

FIG. 17A

TO FIG. 17B

14

FIG. 17B

FIG. 18

| CASE | ERROR DETECTION OF Q DECODING | ERROR DETECTION OF P DECODING | ERROR LOCATION OF P DECODING | PROCESSING RESULT AS A PACK |
|---|---|---|---|---|
| 1 | 0 ERROR | 0 ERROR | | OK |
| 2 | 0 ERROR | 1 ERROR | $4 \leqq i \leqq 23$ | OK |
| 3 | 0 ERROR | 2 ERRORS | $4 \leqq i,j \leqq 23$ | OK |
| 4 | 0 ERROR | $\geqq 3$ ERRORS | | BAD PACK |
| 5 | 1 ERROR | 0 ERROR | | OK |
| 6 | 1 ERROR | 1 ERROR | $4 \leqq i \leqq 23$ | OK |
| 7 | 1 ERROR | 2 ERRORS | $4 \leqq i,j \leqq 23$ | OK |
| 8 | 1 ERROR | $\geqq 3$ ERRORS | | BAD PACK |
| 9 | $\geqq 2$ ERRORS | 0 ERROR | | ILLEGAL PACK |
| 10 | $\geqq 2$ ERRORS | 1 ERROR | | ILLEGAL PACK |
| 11 | $\geqq 2$ ERRORS | 2 ERRORS | $0 \leqq i,j \leqq 3$ | OK |
| 12 | $\geqq 2$ ERRORS | $\geqq 3$ ERRORS | | BAD PACK |

FIG. 19

FIG. 20A

To Fig. 20B

FIG. 20B

FROM FIG. 20A

Calculate syndromes — 161

162

1-symbol error ? — 163

NO

No error ? — 164

NO

YES

YES

Calculate error location — 165

(0 ≤ i ≤ 3)? — 166

NO

YES

Check P flag — 168

Error location coincident ? — 169

NO

YES

167

Illegal pack

END

Correct error — 170

172

Transfer Q flag — 171

Transfer Q flag

To FIG. 17B